# EUROPEAN PATENT SPECIFICATION

(11) **EP 4 076 796 B1**
(45) Date of publication and mention of the grant of the patent: **11.03.2026**
(21) Application number: 21744481.9
(22) Date of filing: 21.01.2021
(51) Int. Cl.: B22F 3/105, B23K 26/34, B33Y 30/00, B33Y 10/00, B23K 26/082, B22F 10/25, B22F 12/44, B22F 7/06, B23K 26/00, B23K 26/03, B23K 26/06, B23K 26/14, B23K 26/144, C22C 1/04, B23K 26/08

(54) **SYSTEM AND METHOD FOR LASER METAL POWDER DEPOSITION**
SYSTEM UND VERFAHREN ZUR LASER-METALLPULVERABSCHEIDUNG
SYSTÈME ET PROCÉDÉ DE DÉPÔT DE POUDRE MÉTALLIQUE PAR LASER

(30) Priority: 21.01.2020 US 202062963600 P
(43) Date of publication of application: 26.10.2022
(73) Proprietor: IPG Photonics Corporation, Oxford, MA 01540 (US)
(72) Inventor: FRANZOSI, Marco, Oxford, MA 01540 (US); DE GIORGI, Chiara, Oxford, MA 01540 (US)
(74) Representative: Kobiako von Gamm, Iouri
(86) International application number: PCT/US2021/014329
(87) International publication number: WO 2021/150691

(56) References cited:
- EP-A2- 1 029 629
- EP-A2- 1 029 629
- WO-A1-2016/205805
- WO-A1-2016/205805
- CN-A- 104 289 811
- CN-A- 104 289 811
- JP-A- 2019 162 669
- JP-A- 2019 162 669
- US-A- 6 143 378
- US-A1- 2019 314 932
- US-A1- 2019 388 968
- Y. JEONG ET AL: "Ytterbium-doped large-core fiber laser with 1.36 kW continuous-wave output power", OPTICS EXPRESS, 13 December 2004 (2004-12-13), United States, pages 6088 - 6092, XP055198308, Retrieved from the Internet <URL:http://www.opticsinfobase.org/abstract.cfm?URI=oe-12-25-6088> [retrieved on 20150625], DOI: 10.1364/OPEX.12.006088
- IMRAN MUHAMMAD MU'AZ ET AL: "Advancements in 3D Printing: Directed Energy Deposition Techniques, Defect Analysis, and Quality Monitoring", TECHNOLOGIES, vol. 12, no. 6, 7 June 2024 (2024-06-07), pages 86, XP093305269, ISSN: 2227-7080, DOI: 10.3390/technologies12060086
- GANGXIAN ZHU ET AL: "The influence of laser and powder defocusing characteristics on the surface quality in laser direct metal deposition", OPTICS AND LASER TECHNOLOGY, ELSEVIER SCIENCE PUBLISHERS BV., AMSTERDAM, NL, vol. 44, no. 2, 4 August 2011 (2011-08-04), pages 349 - 356, XP028391434, ISSN: 0030-3992, [retrieved on 20110726], DOI: 10.1016/J.OPTLASTEC.2011.07.013
- RABL ANTONIA ET AL: "Influence of the focus wobbling technique on the integrity and the properties of electron beam welded MarBN steel", WELDING IN THE WORLD, vol. 63, no. 3, 6 January 2019 (2019-01-06), DE, pages 715 - 724, XP093305286, ISSN: 0043-2288, Retrieved from the Internet <URL:http://link.springer.com/article/10.1007/s40194-018-00700-1/fulltext.html> DOI: 10.1007/s40194-018-00700-1

## Description

### BACKGROUND

### Technical Field

The technical field relates generally to metal powder deposition, and more specifically to a fiber laser system and method for depositing a metal powder onto a workpiece surface using laser beam wobbling.

### Background Discussion

Laser metal deposition (LMD) is an additive technique that involves using a laser beam to form a pool of melted metal (a melt pool) on the surface of a metallic substrate into which metal powder is impinged via a gas stream. The metal powder is absorbed into the melt pool (i.e., melts and bonds with the base material) and generates a deposit on the surface of the substrate. These deposits may be used to build or repair metal parts for many different applications. For instance, LMD is applicable to several fields of industrial application, including surface cladding, repair welding, and generative manufacturing, especially in mould, tool, and parts types of applications. Coating materials can include metal alloys (e.g., Co, Ni, Cu basis, Ti and steel), hard metals (e.g., carbides), and ceramics. Base metal materials may include steel, cast iron, bronze, and metal alloys.

LMD has the ability to coat softer metals that result in a hard, high-quality surface using a metallurgical bond as opposed to a mechanical bond created using spray welding or plating techniques. Base materials having desired thermal insulating properties can be coated with a conductive layer or other layers that are resistive to environmental effects, such as high (or low) temperatures, salt, water, and/or chemicals. LMD processing methods offer many benefits, including low, controlled heat input (i.e.. LMD conducts less heat into the substrate material than many conventional techniques) and rapid cooling rates, and is capable of creating a fine microstructure with minimal dilution and heat affected zones (HAZ). These attributes minimize defects caused by stress and distortion. LMD also offers economic benefits, such as faster production times and lower costs. However. even with these advantages, there are many applications that require even faster deposition rates and enhanced process control and stability, tool flexibility, and dilution control.

Related prior art documents comprise: US 2019/314932 A1, CN 104 289 811 A, WO 2016/205805 A1, EP 1 029 629 A2, JP 2019 162669 A, US 2019/388968 A1.

### Introduction

The scope of protection is defined by the appended claims.

### BRIEF DESCRIPTION OF DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a schematic block diagram of one example of a system for laser metal powder deposition in accordance with one or more aspects of the invention:
FIG. 2 is a schematic diagram of a wobbling laser beam within an aperture of a nozzle in accordance with one or more aspects of the invention;
FIG. 3 is a schematic diagram of a collimated laser beam being focused by a focus lens to a focal point location below a workpiece surface in accordance with aspects of the invention;
FIGS. 4A-4D are schematics illustrating different wobble patterns capable of being produced by a laser head containing a wobbler module in accordance with aspects of the invention; and
FIG. 5 is a schematic of another example of a system for laser metal powder deposition in accordance with aspects of the invention.

### DETAILED DESCRIPTION

Disclosed example systems and methods are configured to be used to deposit metal powder using laser beam wobbling. This approach is capable of increasing the performance of LMD processes over conventional LMD processes and is applicable to several fields such as part repair (e.g., moulds, turbine blades, etc.), hardfacing, cladding, or processes that involves the deposition of an alloy onto a parent metal for purposes of increasing surface corrosion resistance, wear resistance, tribological characteristics, etc., as well as deposition processes linked to additive manufacturing.

The disclosed technique is a type of LMD process that offers several advantages over existing LMD processes, including faster deposition rates, increases in process stability, tool flexibility, and dilution control, as well as control in cooling and/or heating rates. For example, wobbling the deposition process laser beam boosts process stability by reducing sensitivity variations between the nozzle standoff and focal position with respect to the workpiece surface. Deposition rates of several kg/hr can be achieved using wobble deposition techniques. In addition, the wobble pattern, amplitude, and frequency can be tuned for different surfaces (e.g., shape, surface structure, surface material, etc.), which increases the flexibility of the system. For instance, the deposition rate can be reduced (or increased) for a region or regions of a workpiece by adjusting the wobble pattern, amplitude, and/or frequency. The oscillation of the beam implemented by the wobble aspect of the invention also results in better control of dilution, i.e., optimized dilution of the added layer of material. High dilution results in too much laser power being used to re-melt the substrate, which can result in overheating, whereas low dilution leads to poor bonding to the substrate and even lack of fusion. Furthermore, laser deposition using beam wobbling increases control of the cooling and heating rates and reduces the need for post weld heat treatment (PWHT). Residual stress and deformation introduced by the deposition process are also reduced when using beam wobbling deposition as compared to conventional cladding processes.

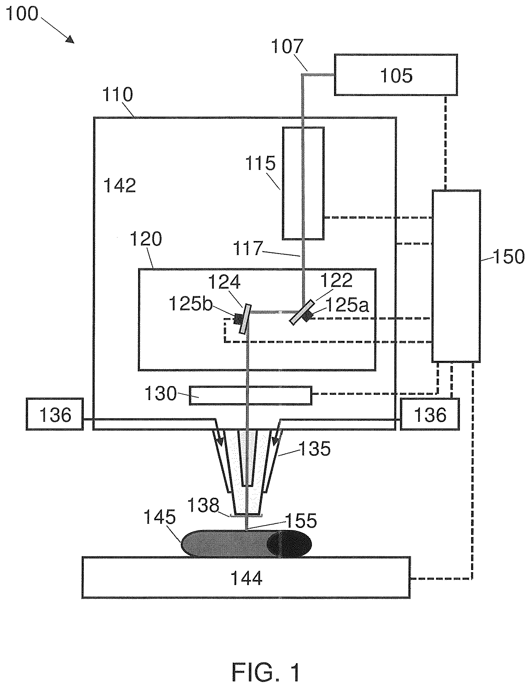

FIG. 1 illustrates a system, shown generally at 100, for laser metal deposition. For example, system 100 is configured to be used to deposit metal material onto a workpiece 145. System 100 includes a fiber laser 105 configured to generate a laser beam that may be propagated within an output fiber 107 and a laser head 110 that is configured to receive the laser beam from the fiber laser 105. The laser head 110 includes a collimator 115, a wobbler module 120 having first and second movable mirrors 122 and 124, and a focus lens 130.

The workpiece 145 may be constructed from any one of a number of different materials, depending on the desired application. Non-limiting examples of base materials that the workpiece 145 may be constructed from include metal materials, such as steel, cast iron, bronze, carbides, and metal alloys and superalloys such as Inconel. The workpiece may be a component in applications that require the component to withstand high temperature (thermal) capacity and/or corrosion (oxidation, acid, alkaline, and salts) (e.g., glass moulds), and/or other chemical resistance; oil and gas drilling and extraction, refining, storage and distribution. According to one embodiment, the workpiece 145 is a glass mould. Such moulds are typically made of a base metal material and used in making glass objects, such as lenses.

The fiber laser 105 may include a Ytterbium (Yb) fiber laser capable of generating a laser within the near-infrared spectral range (e.g., a center wavelength ranging from about 1030-1080 nm). Other fiber lasers are also within the scope of this disclosure, including Yb fiber lasers in the 978-1020 nm range, Erbium lasers. Thulium lasers, and green lasers, and in some instances, visible wavelength ranges are also possible. According to at least one embodiment, the laser beam generated by the fiber laser 105 has a power of at least 0.5 kW, and according to one embodiment can have a minimum power of about 0.3 kW. Higher laser powers, up to and including 10 kW are also feasible, and in some instances the laser power may be in a range between 16-20 kW. The fiber laser may be configured to emit single mode or multimode light and may be operated in continuous or pulsed mode. Non-limiting examples of suitable fiber lasers include the YLS Series of lasers available from IPG Photonics Corporation. The fiber laser 105 may also include an adjustable mode beam (AMB) laser such as the YLS-AMB series laser available from IPG Photonics. The fiber laser 105 may also include a multi-beam fiber laser, such as the types disclosed in International Application no. PCT/US2015/45037, titled MULTIBEAM FIBER LASER SYSTEM, which is capable of selectively delivering one or more laser beams through multiple fibers, and PCT/US2019/064521, titled ULTRAHIGH FIBER LASER SYSTEM WITH CONTROLLABLE OUTPUT BEAM INTENSITY PROFILES. which describes a system configured with multiple fibers lasers and capable of delivering beams with different intensity distribution profiles (e.g., central and/or donut shape) simultaneously or sequentially. It is to be appreciated that besides fiber lasers, other types of solid-state laser sources are also within the scope of this disclosure, e.g., Nd:YAG lasers.

The collimator 115 is configured to collimate the laser beam from the fiber laser 105. The collimator 115 includes one or more collimating optical elements, e.g., collimator lenses. that collimate the laser beam, as those skilled in the art will recognize. A collimated laser beam 117 is output by the collimator 115. According to some embodiments, the collimator 115 may also include one or more optics, such as movable lenses, that are capable of adjusting the beam spot size and/or focal point.

The wobbler module 120 is positioned downstream from the collimator 115 and is configured to receive the collimated laser beam 117 from the collimator 115. The wobbler module 120 includes first and second movable mirrors 122 and 124. The first movable mirror 122 is positioned upstream from the second movable mirror 124. The first and second movable mirrors 122, 124 are configured to reflect and move the collimated laser beam, i.e., wobble the collimated laser beam in respective first and second axes. The first movable mirror 122 reflects and directs the collimated laser beam to the second movable mirror 124, which in turn reflects and directs the collimated laser beam to the focus lens 130. The first and second movable mirrors 122 and 124 are pivotable about different axes (i.e., x and y axes) to cause the collimated laser beam 117 to move and thus to cause the focused (and collimated) laser beam 155 to move relative to the workpiece 145 in at least two different perpendicular axes. The movable mirrors 122, 124 may be galvanometer mirrors that are each movable by galvo motors 125a, 125b (also referred to herein as galvanometers), respectively, that are controlled by a controller 150. The galvo motors are capable of reversing direction quickly. In other embodiments, other mechanisms may be used to move the mirrors such as stepper motors. Using the movable mirrors 122, 124 allows for beam wobbling without having to move the entire laser head 110 and without having to use rotating prisms.

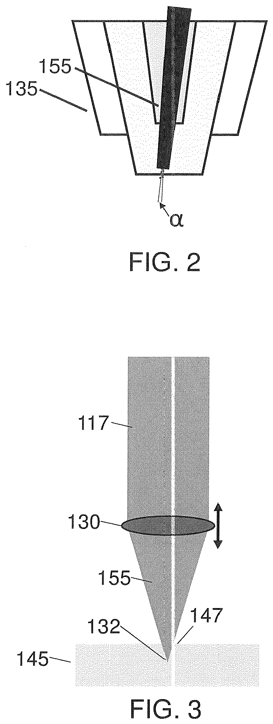

In accordance with at least one embodiment, the first and second movable mirrors 122 and 124 move the focused laser beam 155 within a scan angle that is in a range of 0.1-2°. For instance, the controller 150 controls the movable mirrors 122, 124 such that the mirrors pivot the beam 155 within a scan angle alpha (α) of about 0.1-2°, as shown in FIG. 2, thereby allowing the beam to wobble. In accordance with various embodiments, the wobble diameter (i.e., the diameter of the wobble pattern) has a maximum value of about 6 mm, and in some embodiments is about 3 mm. It is to be appreciated, however, that the wobble diameter may be smaller or larger than these recited values for certain applications. In certain instances, the wobble diameter is a function of (or otherwise limited by) the diameter of the nozzle orifice/aperture. This limited beam movement (i.e.. wobble diameter) is in contrast to conventional laser scan heads that generally provide movement of the laser beam within a much larger field of view (e.g., 50x50 mm and as large as 250x250 mm) and are therefore designed to accommodate a larger field of view and scan angle. The use of the moveable mirrors 122, 124 therefore provides only a relatively small beam movement, which is contrary to the conventional wisdom of providing a wider field of view when using galvo scanners. Limiting the scan angle and beam movement can provide advantages, such as faster speeds, allowing for the capability to use less expensive components such as lenses, and by allowing the use of certain accessories such as gas assist accessories to deliver shield gas for certain applications. The smaller beam movement and scan angle also allow for the second movable mirror 124 to be substantially the same size as the first movable mirror 122. In contrast, conventional galvo scanners generally use a larger second mirror to provide for the larger field of view and scan angle, and the larger second mirror limits the speed of movement in at least one axis. The smaller sized movable second mirror 124 (e.g., about the same size as the first movable mirror 122) in the wobbler module 120 and laser head 110 thus enables the second movable mirror 124 to move with faster speeds as compared to larger mirrors in conventional galvo scanners providing large scan angles.

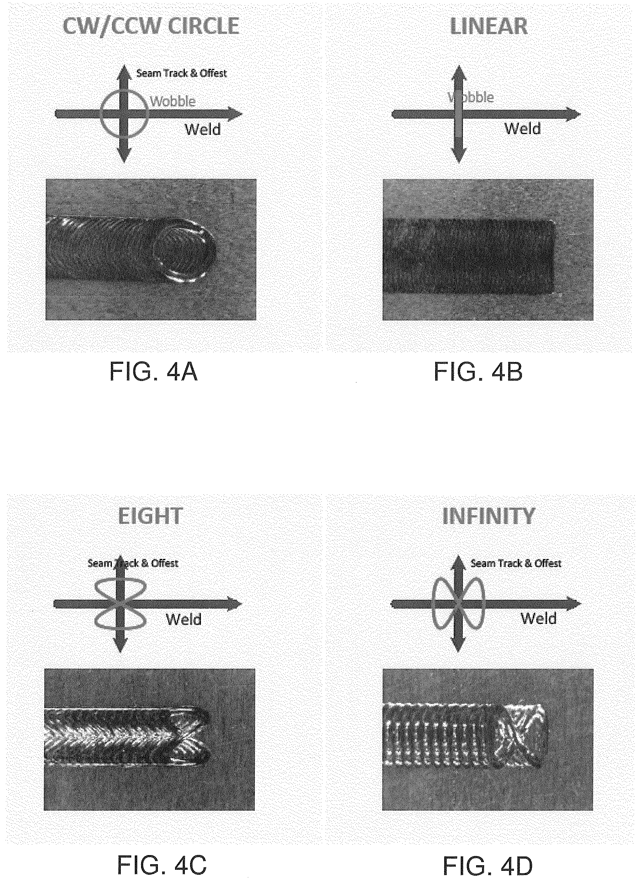

According to one embodiment, the wobbler module 120 is configured to wobble the collimated laser beam 117 in coordination with movement of at least one of the workpiece 145 and the laser head 110 in a repeating wobble pattern on the surface of the workpiece 145. FIGS. 4A-4D illustrate examples of wobble patterns that may be used in the laser deposition methods described herein. As used herein, "wobble" refers to reciprocating movement of a laser beam in two axes by mirrors configured to implement a scan angle of about 0.1-2°. FIG. 4A shows a clockwise or counterclockwise circular pattern, FIG. 4B shows a linear pattern, FIG. 4C shows a figure-8 pattern, and FIG. 4D shows an infinity pattern. As will be appreciated, these wobble patterns are non-limiting and other patterns are also within the scope of this disclosure. Aspects of the wobbler module 120 are described in U.S. Patent Application No. 15/187,235, now Patent No. 10,751,835, which is owned by Applicant and is fully incorporated herein by reference.

Returning now to FIG. 1, the laser head 110 and/or the workpiece 145 may be moved relative to each other using movement mechanisms, such as motion stages. For instance, the laser head 110 may be located on a motion stage 142 for moving the laser head 110 relative to the workpiece along at least one axis. Additionally, or alternatively, the workpiece 145 may be located on a motion stage 144 for moving the workpiece 145 relative to the laser head 110. Both stages 142 and 144 can be controlled by controller 150.

The laser head 110 also includes a focus lens 130. The focus lens 130 is not a scanning lens, which is in contrast to conventional laser scan heads that employ the use of multi-element scanning lenses, such as F-Theta lenses, field flattening lenses, and/or telecentric lenses, with much larger diameters to focus the beam within the larger field of view. Since the first and second movable mirrors 122, 124 are moving the beam within a relatively small field of view, a larger multi-element scanning lens is not required and not used. The use of the smaller lens may also allow for additional accessories, such an air knife and/or gas assist accessories, to be used at the end of the laser head. The focus lens 130 may have a variety of focal lengths ranging, for example, from 100 mm to 1000 mm.

The focus lens 130 is configured to focus the collimated laser beam 117 such that the focal point 132 of the focused collimated laser beam 155 is positioned below the workpiece surface 147, as shown in FIG. 3. The inventors have found that positioning the focal point below the surface of the workpiece achieved better deposition results than when the focal point was at the surface or above the surface. In accordance with some embodiments, the focal point location is within a range of 1-30 mm below the workpiece surface, and in some instances may be 5-20 mm below the workpiece surface. It is to be appreciated that the optimum distance of the focal point below the surface of the workpiece will depend on multiple factors, non-limiting examples of which include the thickness and material type of the base material, the desired deposition rate, and the characteristics of the metal powder (e.g., powder material, powder size, etc.).

According to at least one embodiment, the position of the focal point 132 can be adjusted by having the controller 150 control one or more components in the laser head 110, e.g., for instance, the position of the focus lens 130 by moving the focal lens up or down in the z-axis direction, as indicated by the arrow in FIG. 3. In other embodiments, the laser head 110 may be moved via the motion stage 142 that is controlled by the controller 150, and/or the workpiece 145 may be moved via motion stage 144. In still other embodiments, one or more components of the collimator 115 may be adjusted to move the position of the focal point 132.

Returning again to FIG. 1, the focused collimated laser beam 155 is also directed through a powder nozzle device 135 configured to deliver metal powder to a region on the workpiece surface 147 (see FIG. 3) that is heated by the focused collimated laser beam 155. Metal powder can be supplied to the powder nozzle device 135 by metal powder supply 136. The powder nozzle device 135 can be attached to the laser head 110, and is configured to be coaxial with the focused collimated laser beam 155. For instance, the powder nozzle device 135 has an aperture 138 through which the focused collimated laser beam 155 propagates (and wobbles). According to some embodiments, the aperture 138 has a maximum diameter of about 6 mm, but larger diameters are also within the scope of this disclosure. Non-limiting examples of coaxial nozzles include coaxial powder nozzles developed by Fraunhofer or similar devices. In some instances, a cooling system is incorporated with the powder nozzle device 135 for purposes of temperature control.

Depending on the desired application, the metal powder may be any one of a metal alloy (e.g., Co, Ni, Cu basis, Ti and steel), a metal superalloy (e.g., nickel based superalloys such as Inconel, Hastelloy, Waspaloy, Rene alloys and the like), or a hard metal (e.g., carbides).

As mentioned above, implementing laser wobbling as part of the LMD method and system increases the deposition rate over LMD configurations that do not include the laser beam wobbling. In accordance with at least one embodiment, system 100 is configured such that a metal powder deposition rate is at least 1 kg/hr, with some embodiments capable of obtaining deposition rates of several kg/hr, e.g., 2-5 kg/hr, and in some applications can the deposition rates exceed 5 kg/hr. In one non-limiting example, an alloy similar to Inconel 625 was deposited at a rate of about 4 kg/hr using a 4 kW laser. These deposition rates are in contrast to conventional LMD systems that are not configured with laser beam wobble, which typically have deposition rates of 0.5-0.8 kg/hr. It is to be appreciated that deposition rates lower than 1 kg/hr are also within the scope of this disclosure, for instance, in applications that deposit oxide materials. Lower deposition rates may also be within the scope of certain types of applications, e.g., high velocity oxygen fuel (HVOF) coatings. The fiber laser 105 and wobble module 120 can be controlled by controller 150 to achieve these enhanced deposition rates. The flexibility of the LMD system 100 is also enhanced with the wobble capability, since at least one of the wobble pattern, frequency, and amplitude of the wobble can be adjusted to achieve different deposition rates. In some embodiments, multiple (different) deposition rates can be used in a single deposition process by using different wobble process parameters (e.g., wobble pattern, frequency, amplitude). Such an approach can also include the use of a static laser spot to achieve a very low deposition rate. In accordance with one embodiment, the wobble frequency is in a range of 50 to 1000 Hz and the wobble amplitude is in a range of 0.5 mm to 12 mm. According to one embodiment, the LMD system 100 is capable of achieving coating speeds of 0.2 - 4 m/min.

According to some embodiments, the deposition rate creates an overlay thickness of at least 1 mm, and in some instances may be at least 2 mm, although it is to be appreciated that thinner overlay thicknesses (e.g., less than 1 mm) are also within the scope of this disclosure and may be dependent on a particular application (e.g., depositing oxides and/or in HVOF coatings). As will be appreciated, multiple passes may be performed to achieve a desired thickness. Furthermore, using LMD with laser beam wobble further minimizes or otherwise reduces dilution as compared to LMD systems that do not include laser beam wobble. Low dilution means that there is very little of the base material mixed with the coating, leaving a surface layer of cladding that is very close to the pure clad material.

The controller 150 is configured to control one or more components of the LMD system 100. As indicated in FIG. 1, controller 150 is configured to communicate with the fiber laser 105, the laser head motion stage 142, the workpiece motion stage 144, the first and second movable mirrors 122, 124, the focus lens 130. and the powder supply/powder delivery 136 (which can also include the powder nozzle device 135). For instance, the positioning of the movable mirrors 122, 124 and/or the motion stages 142, 144 can be controlled by the controller 150. In addition, the controller 150 may also control laser parameters, such as laser power, and wobble process parameters, such as the wobble pattern, frequency and amplitude. In some instances, the controller 150 may be configured to operate according to a pre-set or predetermined operating control scheme, and in other instances the controller 150 may be configured to operate in a feedforward or feedback control scheme using information obtained from one or more cameras or sensors or other sources of input (e.g., operator), and may therefore be operatively coupled to these sources of input. Non-limiting examples of input sources are discussed below. The controller 150 includes hardware (e.g., a general purpose computer) and software that may be used in controlling the components of the system. It is to be appreciated that more than one controller or control device may be used.

System 100 may also include one or more detectors, such as a camera, and/or sensors for providing various feedback data to the controller 150. For instance, one or more process parameters such as powder injection parameters, laser power, feed rate, temperature, clad (overlay) thickness, level of dilution, and laser surfacing parameters such as substrate thickness or substrate surface conditions may be monitored.

Although not explicitly shown, in accordance with another embodiment the laser head 110 may also include a fixed mirror that can be used to direct the collimated beam 117 to the focus lens 130. The use of a fixed mirror may be used in some applications where a laser head having a smaller footprint is desired.

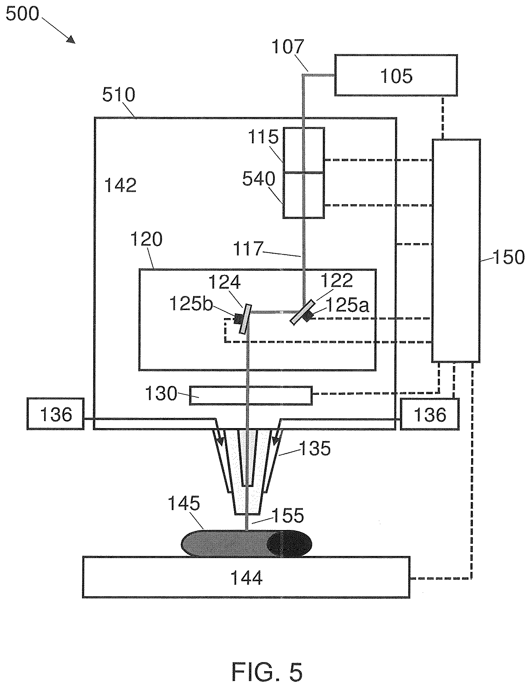

Other optical components may also be used in the laser head 110. For example, FIG. 5 illustrates a system 500 for LMD that is similar to system 100 of FIG. 1, but in this example the laser head 510 also includes a beam shaper module 540 positioned between the collimator 115 and the wobbler module 120. The beam shaper module 540 is configured to receive and shape the collimated laser beam 117. For instance, the beam shaper module 540 may receive an input beam with a Gaussian profile and circular beam spot and may include at least one beam shaping diffractive optical element for shaping the beam. Non-limiting examples of beam shapes that may be implemented using the beam shaper module 540 include "top hat," elliptical, rectangular, square, and ring shapes. One or more components of the beam shaper module 540 may also be controlled by controller 150.

Some embodiments of the present invention provide a method that includes providing a fiber laser configured to generate a laser beam, collimating the laser beam by passing the laser beam through a collimator, providing a wobbler module having first and second movable mirrors of approximately the same size and configured to receive the collimated laser beam and to wobble the collimated laser bean in first and second axes within a scan angle of about 0.1-2°, directing the laser beam through a focus lens that is not a scanning lens and is configured to focus and direct the collimated laser beam through a powder nozzle device such that the focused collimated laser beam has a focal point location that is below a workpiece surface, and using the focused collimated beam to heat a region on the workpiece surface that is impinged by metal powder delivered by the powder nozzle device.

Some embodiments of this method further include moving the first and second movable mirrors to wobble the collimated laser beam in a repeating wobble pattern within an aperture of the powder nozzle device. In some embodiments, the wobble pattern has a diameter having a maximum value of about 6 mm.

Some embodiments of this method further include providing a laser head that includes the collimator, the wobbler module, and the focus lens.

Some embodiments of this method further include providing the fiber laser. In some embodiments, the fiber laser is configured to have a power of at least 0.3 kW.

Some embodiments of this method further include adjusting at least one component of the laser head such that the focal point location is in a range of about 1-30 mm below the workpiece surface. In some embodiments, the focal point location is adjusted to be in a range of about 5-20 mm below the workpiece surface.

Some embodiments of this method further include wobbling the collimated laser beam in coordination with movement of at least one of the workpiece and the laser head.

Some embodiments of this method further include controlling the fiber laser and wobbler module such that a deposition rate of the metal powder is at least 1 kg/hr. In some embodiments, the workpiece is a glass mould and the metal powder is a nickel based superalloy.

As mentioned above. LMD with laser beam wobble provides several benefits over LMD processes not equipped with the wobble capability. For instance, wobbling reduces sensitivity variations between the nozzle standoff and focal position with respect to the workpiece surface, i.e., wobbling increases the system's technological depth of field in comparison to LMD configurations that do not include beam wobble.

LMD with laser beam wobble also allows for increased control in the heating and cooling rates of the deposition process, i.e., the thermal input can be more easily controlled over systems that do not have wobbling capabilities. For example, superalloys are susceptible to microcracking during localized heating Wobbling with the laser beam during deposition allows for better control of heat input. e.g., wobbling prevents the creation of hot spots, which allow for better homogenization of the alloy's components. This leads to a reduction in residual stress and deformation that can be introduced by the deposition process.

The disclosed process also reduces the impact of the Heat Affected Zone (HAZ). i.e.. leads to a smaller HAZ. For instance, deposition of an alloy onto a substrate or base material creates a region just below the weld/base material interface in which the base material was not melted, but the localized temperature was raised to the point that its microstructure and therefore material properties were changed. This region is known as the HAZ. These changes to the material properties are usually less than desirable, and can compromise a component's function and/or lifespan, because the microstructure change can result in reduced strength, increased brittleness or lower corrosion resistance. Several non-limiting technological reasons as to why introducing wobbling technology to the cladding process may reduce the HAZ include: the ability of the beam oscillation to introduce a mixing effect, thereby yielding a more homogeneous chemical composition of melted material, the ability of the beam oscillation to increase the "virtual speed" of the laser, thereby providing the ability to avoid local overheating in the material, and the ability of the beam oscillation to distribute laser power over a wider surface, thereby increasing the overall thermal input such that rapid heating or cooling is avoided. The wobble therefore allows for the available laser power to be optimized for purposes of increasing productivity while also not detrimentally affecting the quality of the material.

Although the systems and methods described above have related to metal powder deposition using a coaxial nozzle, it is to be appreciated that other configurations, including offline powder nozzles (e.g., pre-placed cladding processes) and wire feed systems are also within the scope of this disclosure.

The aspects disclosed herein in accordance with the present invention, are not limited in their application to the details of construction and the arrangement of components set forth in the following description or illustrated in the accompanying drawings. These aspects are capable of assuming other embodiments and of being practiced or of being carried out in various ways. Examples of specific implementations are provided herein for illustrative purposes only and are not intended to be limiting. In particular, acts, components, elements, and features discussed in connection with any one or more embodiments are not intended to be excluded from a similar role in any other embodiments.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated reference is supplementary to that of this document; for irreconcilable inconsistencies, the term usage in this document controls.

Having thus described several aspects of at least one example, it is to be appreciated that various alterations, modifications, and improvements will readily occur to those skilled in the art. For instance, examples disclosed herein may also be used in other contexts. Such alterations, modifications, and improvements are intended to be part of this disclosure, and are intended to be within the scope of the examples discussed herein. Accordingly, the foregoing description and drawings are by way of example only.

## Claims

1. A system (100) for laser metal powder deposition onto a workpiece (145), comprising:
a controller (150) configured to control one or more components of the system (100);
a powder nozzle device (135) configured to deliver metal powder to a region on a surface of the workpiece (145);
a fiber laser (105) configured to generate a laser beam; and
a laser head (110) configured to receive the laser beam from the fiber laser (105) and including:
a collimator (115) configured to collimate the laser beam;
a wobbler module (120) having first and second movable mirrors (122, 124), the first and second movable mirrors (122, 124) being approximately the same size and configured to receive the collimated laser beam (117) from the collimator (115) and to wobble the collimated laser beam (117) in first and second axes within a scan angle of about 0.1-2°; and
a focus lens (130) that is not a scanning lens and is configured to focus the collimated laser beam (117), wherein the focused collimated laser beam (155) is directed through the powder nozzle device (135) such that a focal point location of the focused collimated laser beam (155) is positioned below the workpiece surface..

2. The system (100) of claim 1, configured such that a metal powder deposition rate is at least 1 kg/hr.

3. The system (100) of claim 1, wherein the focal point location of the focused collimated laser beam (155) is within a range of 1-30 mm below the workpiece surface.

4. The system (100) of claim 3, wherein the focal point location is within a range of 5-20 mm below the workpiece surface.

5. The system (100) of claim 1, wherein the metal powder is a nickel-based superalloy.

6. The system (100) of claim 5, wherein the workpiece (145) is a glass mould.

7. The system (100) of claim 1, wherein the laser beam generated by the fiber laser (105) has a power of at least 0.3 kW.

8. The system (100) of claim 1, wherein the controller (150) is configured to control the first and second movable mirrors (122, 124) such that the first and second mirrors (122, 124) pivot the focused collimated laser beam (155) within the scan angle of about 0.1 -2°, thereby allowing the focused collimated laser beam (155) to wobble within a diameter having a maximum value of about 6 mm on the workpiece surface.

9. A laser metal powder deposition method, comprising:
providing the system of claim 1;
directing the laser beam through a focus lens (130) that is not a scanning lens and is configured to focus and direct the collimated laser beam (117) through the powder nozzle device (135) such that the focused collimated laser beam (155) has a focal point location that is below the workpiece surface; and
using the focused collimated beam (155) to heat a region on the workpiece surface that is impinged by metal powder delivered by the powder nozzle device (135).

10. The method of claim 9, further comprising moving the first and second movable mirrors to wobble the collimated laser beam (117) in a repeating wobble pattern within an aperture of the powder nozzle device (135).

11. The method of claim 10, further comprising
moving the first and second movable mirrors to wobble the collimated laser beam (117) in a repeating wobble pattern within an aperture of the powder nozzle device (135) and wherein the wobble pattern has a diameter having a maximum value of about 6 mm.

12. The method of claim 11, wherein the fiber laser (105) is configured to have a power of at least 0.3 kW.

13. The method of claim 9, further comprising
adjusting at least one component of the laser head (110) such that the focal point location is in a range of about 1-30 mm below the workpiece surface.

14. The method of claim 13, wherein the focal point location is adjusted to be in a range of about 5-20 mm below the workpiece surface.

15. The method of claim 9,
further comprising controlling the fiber laser (105) and wobbler module (120) such that a deposition rate of the metal powder is at least 1 kg/hr, or
wherein the workpiece (145) is a glass mould and the metal powder is a nickel-based superalloy.

## Patentansprüche

1. System (100) für die Laser-Metallpulverablagerung auf ein Werkstück (145), wobei das System umfasst:
eine Steuereinheit (150), die dafür konfiguriert ist, eine oder mehrere Komponenten des Systems (100) zu steuern;
eine Pulverdüsenvorrichtung (135), die dafür konfiguriert ist, Metallpulver in ein Gebiet auf einer Oberfläche des Werkstücks (145) abzugeben;
einen Faserlaser (105), der dafür konfiguriert ist, einen Laserstrahl zu erzeugen; und
einen Laserkopf (110), der dafür konfiguriert ist, den Laserstrahl von dem Faserlaser (105) zu empfangen, und der enthält:
einen Kollimator (115), der dafür konfiguriert ist, den Laserstrahl zu kollimieren;
ein Wobbelmodul (120), das einen ersten und einen zweiten beweglichen Spiegel (122, 124) aufweist, wobei der erste und der zweite bewegliche Spiegel (122, 124) näherungsweise dieselbe Größe aufweisen und dafür konfiguriert sind, den kollimierten Laserstrahl (117) von dem Kollimator (115) zu empfangen und den kollimierten Laserstrahl (117) in einer ersten und einer zweiten Achse innerhalb eines Abtastwinkels von etwa 0,1-2° zu wobbeln; und
eine Fokussierlinse (130), die keine Abtastlinse ist und die dafür konfiguriert ist, den kollimierten Laserstrahl (117) zu fokussieren, wobei der fokussierte kollimierte Laserstrahl (155) in der Weise durch die Pulverdüsenvorrichtung (135) gelenkt wird, dass ein Brennpunktort des fokussierten kollimierten Laserstrahls (155) unter der Werkstückoberfläche positioniert ist.

2. System (100) nach Anspruch 1, das so konfiguriert ist, dass eine Metallpulver-Ablagerungsrate wenigstens 1 kg/h ist.

3. System (100) nach Anspruch 1, wobei der Brennpunktort des fokussierten kollimierten Laserstrahls (155) innerhalb eines Bereichs von 1-30 mm unter der Werkstückoberfläche ist.

4. System (100) nach Anspruch 3, wobei der Brennpunktort innerhalb eines Bereichs von 5-20 mm unter der Werkstückoberfläche ist.

5. System (100) nach Anspruch 1, wobei das Metallpulver eine Superlegierung auf Nickelgrundlage ist.

6. System (100) nach Anspruch 5, wobei das Werkstück (145) eine Glasform ist.

7. System (100) nach Anspruch 1, wobei der durch den Faserlaser (105) erzeugte Laserstrahl eine Leistung von wenigstens 0,3 kW aufweist.

8. System (100) nach Anspruch 1, wobei die Steuereinheit (150) dafür konfiguriert ist, den ersten und den zweiten beweglichen Spiegel (122, 124) in der Weise zu steuern, dass der erste und der zweite Spiegel (122, 124) den fokussierten kollimierten Laserstrahl (155) innerhalb des Abtastwinkels von etwa 0,1-2° schwenken, wodurch ermöglicht wird, dass der fokussierte kollimierten Laserstrahl (155) innerhalb eines Durchmessers mit einem Maximalwert von etwa 6 mm auf der Werkstückoberfläche wobbelt.

9. Laser-Metallpulverablagerungsverfahren, das umfasst:
Bereitstellen des Systems nach Anspruch 1;
Lenken des Laserstrahls durch eine Fokussierungslinse (130), die keine Abtastlinse ist und die dafür konfiguriert ist, den kollimierten Laserstrahl (117) zu fokussieren und in der Weise durch die Pulverdüsenvorrichtung (135) lenken, dass der fokussierte kollimierte Laserstrahl (155) einen Brennpunktort aufweist, der unter der Werkstückoberfläche ist; und
Verwenden des fokussierten kollimierten Strahls (155) zum Erwärmen eines Gebiets auf der Werkstückoberfläche, auf das das durch die Pulverdüsenvorrichtung (135) abgegebene Metallpulver auftrifft.

10. Verfahren nach Anspruch 9, das ferner das Bewegen des ersten und des zweiten beweglichen Spiegels zum Wobbeln des kollimierten Laserstrahls (117) in einem sich wiederholenden Wobbelmuster innerhalb einer Öffnung der Pulverdüsenvorrichtung (135) umfasst.

11. Verfahren nach Anspruch 10, das ferner umfasst:
Bewegen des ersten und des zweiten beweglichen Spiegels zum Wobbeln des kollimierten Laserstrahls (117) in einem sich wiederholenden Wobbelmuster innerhalb einer Öffnung der Pulverdüsenvorrichtung (135) und wobei das Wobbelmuster einen Durchmesser mit einem Maximalwert von etwa 6 mm aufweist.

12. Verfahren nach Anspruch 11, wobei der Faserlaser (105) so konfiguriert ist, dass er eine Leistung von wenigstens 0,3 kW aufweist.

13. Verfahren nach Anspruch 9, das ferner umfasst:
Einstellen wenigstens einer Komponente des Laserkopfs (110) in der Weise, dass der Brennpunktort in einem Bereich von etwa 1-30 mm unter der Werkstückoberfläche ist.

14. Verfahren nach Anspruch 13, wobei der Brennpunktort so eingestellt wird, dass er in einem Bereich von etwa 5-20 mm unter der Werkstückoberfläche ist.

15. Verfahren nach Anspruch 9,
das ferner das Steuern des Faserlasers (105) und des Wobbelmoduls (120) in der Weise, dass eine Ablagerungsrate des Metallpulvers wenigstens 1 kg/h ist, umfasst, oder
wobei das Werkstück (145) eine Glasform ist und das Metallpulver eine Superlegierung auf Nickelgrundlage ist.

## Revendications

1. Système (100) pour le dépôt de poudre métallique par laser sur une pièce à usiner (145), comprenant :
un contrôleur (150) configuré pour contrôler un ou plusieurs composants du système (100) ;
un dispositif à buse pour poudre (135) configuré pour fournir de la poudre métallique à une région sur une surface de la pièce à usiner (145) ;
un laser à fibre (105) configuré pour générer un faisceau laser ; et
une tête laser (110) configurée pour recevoir le faisceau laser provenant du laser à fibre (105) et comprenant :
un collimateur (115) configuré pour collimater le faisceau laser ;
un module oscillateur (120) comportant un premier et un deuxième miroir mobile (122, 124), le premier et le deuxième miroir mobile (122, 124) étant approximativement de la même taille et configurés pour recevoir le faisceau laser collimaté (117) provenant du collimateur (115) et pour faire osciller le faisceau laser collimaté (117) selon un premier et un deuxième axe dans un angle de balayage d'environ 0,1 à 2° ; et
une lentille de focalisation (130) qui n'est pas une lentille de balayage et qui est configurée pour focaliser le faisceau laser collimaté (117), le faisceau laser collimaté focalisé (155) étant dirigé à travers le dispositif à buse pour poudre (135) de telle sorte que l'emplacement du point focal du faisceau laser collimaté focalisé (155) soit positionné sous la surface de la pièce à usiner.

2. Le système (100) selon la revendication 1, configuré de telle sorte que le taux de dépôt de poudre métallique soit d'au moins 1 kg/h.

3. Le système (100) selon la revendication 1, dans lequel l'emplacement du point focal du faisceau laser collimaté focalisé (155) se situe dans une plage comprise entre 1 et 30 mm sous la surface de la pièce à usiner.

4. Le système (100) selon la revendication 3, dans lequel l'emplacement du point focal se situe dans une plage comprise entre 5 et 20 mm sous la surface de la pièce à usiner.

5. Le système (100) selon la revendication 1, dans lequel la poudre métallique est un superalliage à base de nickel.

6. Le système (100) selon la revendication 5, dans lequel la pièce à usiner (145) est un moule en verre.

7. Le système (100) selon la revendication 1, dans lequel le faisceau laser généré par le laser à fibre (105) a une puissance d'au moins 0,3 kW.

8. Le système (100) selon la revendication 1, dans lequel le contrôleur (150) est configuré pour commander le premier et le deuxième miroir mobile (122, 124) de telle sorte que le premier et le deuxième miroir (122, 124) fassent pivoter le faisceau laser collimaté focalisé (155) dans l'angle de balayage d'environ 0,1 à 2°, permettant ainsi au faisceau laser collimaté focalisé (155) d'osciller dans un diamètre ayant une valeur maximale d'environ 6 mm sur la surface de la pièce à usiner.

9. Procédé de dépôt de poudre métallique par laser, comprenant :
la fourniture du système selon la revendication 1 ;
la direction du faisceau laser à travers une lentille de focalisation (130) qui n'est pas une lentille de balayage et qui est configurée pour focaliser et diriger le faisceau laser collimaté (117) à travers le dispositif à buse pour poudre (135) de telle sorte que le faisceau laser collimaté focalisé (155) ait un emplacement de point focal qui se situe sous la surface de la pièce à usiner ; et
l'utilisation du faisceau collimaté focalisé (155) pour chauffer une région de la surface de la pièce à usiner, qui est frappée par la poudre métallique fournie par le dispositif à buse pour poudre (135).

10. Le procédé selon la revendication 9, comprenant en outre le déplacement du premier et du deuxième miroir mobile afin de faire osciller le faisceau laser collimaté (117) selon un motif oscillatoire répétitif à l'intérieur d'une ouverture du dispositif à buse pour poudre (135).

11. Le procédé selon la revendication 10, comprenant en outre
le déplacement du premier et du deuxième miroir mobile afin de faire osciller le faisceau laser collimaté (117) selon un motif oscillatoire répétitif à l'intérieur d'une ouverture du dispositif à buse pour poudre (135), le motif oscillatoire ayant un diamètre d'une valeur maximale d'environ 6 mm.

12. Le procédé selon la revendication 11, dans lequel le laser à fibre (105) est configuré pour avoir une puissance d'au moins 0,3 kW.

13. Le procédé selon la revendication 9, comprenant en outre
l'ajustement d'au moins un composant de la tête laser (110) de telle sorte que l'emplacement du point focal se situe dans une plage d'environ 1 à 30 mm sous la surface de la pièce à usiner.

14. Le procédé selon la revendication 13, dans lequel l'emplacement du point focal est ajusté pour se situer dans une plage d'environ 5 à 20 mm sous la surface de la pièce à usiner.

15. Le procédé selon la revendication 9,
comprenant en outre le contrôle du laser à fibre (105) et du module oscillateur (120) de telle sorte que le taux de dépôt de la poudre métallique soit d'au moins 1 kg/h, ou dans lequel la pièce à usiner (145) est un moule en verre et la poudre métallique est un superalliage à base de nickel.
